(19) Europäisches Patentamt / European Patent Office / Office européen des brevets

(11) **EP 3 097 455 B1**

(12) **FASCICULE DE BREVET EUROPEEN**

(45) Date de publication et mention de la délivrance du brevet:
**20.02.2019 Bulletin 2019/08**

(21) Numéro de dépôt: **15705644.1**

(22) Date de dépôt: **20.01.2015**

(51) Int Cl.:
**G05B 23/02** *(2006.01)*

(86) Numéro de dépôt international:
**PCT/FR2015/050138**

(87) Numéro de publication internationale:
**WO 2015/107317 (23.07.2015 Gazette 2015/29)**

(54) **PROCEDE DE PREDICTION D'UNE ANOMALIE DE FONCTIONNEMENT DES EQUIPEMENTS D'UN AERONEF OU D'UNE FLOTTE D'AERONEFS**

VERFAHREN ZUR VORHERSAGE EINER FEHLFUNKTION IN DER ANLAGE EINES FLUGZEUGS ODER EINER FLUGZEUGFLOTTE

METHOD FOR PREDICTING AN OPERATIONAL MALFUNCTION IN THE EQUIPMENT OF AN AIRCRAFT OR AIRCRAFT FLEET

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.01.2014 FR 1450434**

(43) Date de publication de la demande:
**30.11.2016 Bulletin 2016/48**

(73) Titulaire: **Pettre, Jean-Hugues**
**75017 Paris (FR)**

(72) Inventeur: **Pettre, Jean-Hugues**
**75017 Paris (FR)**

(74) Mandataire: **Jacobacci Coralis Harle**
**32, rue de l'Arcade**
**75008 Paris (FR)**

(56) Documents cités:
**US-A1- 2003 014 692     US-A1- 2005 197 805**
**US-A1- 2013 274 964**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un procédé de prédiction d'une anomalie de fonctionnement des équipements d'un aéronef d'une flotte d'aéronefs. Elle a des applications dans le domaine de la maintenance des aéronefs.

Au cours du fonctionnement d'un aéronef, les systèmes électroniques embarqués qui surveillent les équipements de l'aéronef et enregistrent des mesures de paramètres de statut ou fonctionnement des équipements peuvent en outre générer des messages de panne qui sont également enregistrés. Ces mesures et messages sont stockés dans une/des mémoires durant le fonctionnement de l'aéronef, et sont ensuite extraits et récupérés par le mécanicien lors des phases de maintenance entre les vols.

Après le vol, pour la maintenance, le mécanicien au sol extrait les messages et, pour chaque message, le mécanicien va exécuter un processus de recherche de confirmation ou non-confirmation de dysfonctionnement. A l'issue de ce processus, le dysfonctionnement est soit confirmé, soit non-confirmé. Ce processus est chronophage car de nombreux messages de même type sont produits à chaque vol, ce qui oblige le mécanicien à intervenir sur l'aéronef même pour des messages répétitifs qui n'entraînent pas, de fait, de dysfonctionnement réel.

Pour réduire le temps de maintenance, il est proposé un procédé d'analyse des mesures enregistrées afin de prévenir le mécanicien d'une anomalie qui n'a pas forcément dégénéré en message de panne au cours du vol mais qui peut être le signe d'une future panne. L'invention permet ainsi d'agir préventivement par rapport aux pannes.

En outre, la maintenance peut concerner une flotte d'aéronef qui comporte plusieurs aéronefs d'un même type, c'est-à-dire des aéronefs qui sont construits de la même façon et comportent donc les mêmes équipements. Aussi, il est intéressant de pouvoir utiliser des informations concernant un ensemble d'aéronefs d'un même type afin d'améliorer la maintenance, ce que le procédé proposé permet.

Dans son principe, l'invention est basée sur la recherche d'une perte de corrélation entre des mesures enregistrées ou signaux de paramètres suivis lors du fonctionnement de l'aéronef au cours de vols. Tout d'abord, on recherche des corrélations fortes entre signaux pour des vols au cours desquels il n'y a pas eu de panne. On garde les paramètres correspondants et on recherche pour d'autres vols, en pratique les derniers vols, s'il n'y a pas eu de perte de corrélation entre ces mêmes paramètres et donc les signaux correspondants. Par mesure de simplification, on s'intéresse à des corrélations entre deux signaux. On considère donc plus particulièrement des corrélations pour des paires de signaux. Une perte de corrélation pour la paire est alors significative d'une anomalie. Dans des variantes on peut considérer des corrélations pour trois (triplets) signaux ou plus de signaux.

On connait par le document US2013/274964 un système de suivi et de validation de données dans lequel on élimine des données selon des critères de validation dont un est basé sur une corrélation entre données. Les données éliminées de l'analyse ultérieure sont celles qui ont perdu leur corrélation. Ce document n'enseigne pas une mise en oeuvre d'une corrélation pour l'analyse des données en vue de prédire des anomalies et, dans tous les cas, il rend cela impossible du fait que les données décorrélées sont éliminées.

On connait également par le document US2005/197805 un système de prévention d'anomalies dans une usine utilisant des calculs statistiques dont de correlation.

Ainsi l'invention concerne un procédé de prédiction d'une anomalie de fonctionnement des équipements d'un aéronef d'une flotte d'aéronefs de même type, chacun desdits équipements de chaque aéronef ayant au moins un paramètre d'état ou de fonctionnement, lesdits paramètres étant suivis au cours de vols, dans le temps, par des mesures de paramètres d'équipement enregistrés dans une mémoire de l'aéronef, lesdites mesures enregistrées, encore appelées signaux, étant repérables dans le temps et pour le paramètre correspondant et pour l'équipement correspondant et pour l'aéronef correspondant, l'aéronef comportant en outre un moyen de détection de pannes des équipements, lesdites pannes étant également enregistrées dans la mémoire de l'aéronef, lesdites pannes enregistrées étant également repérables dans le temps et pour au moins l'équipement correspondant et pour l'aéronef correspondant, les mesures enregistrées et les pannes enregistrées étant en outre repérables pour chaque vol correspondant.

Selon l'invention, lors des phases de maintenance entre des vols,

- on copie les mesures enregistrées, ou signaux, et éventuelle(s) panne(s) dans un calculateur programmable pour former une base de données de signaux d'aéronefs de la flotte, et :

    a) lors d'une phase de maintenance entre vols, on exécute dans le calculateur, au moins une première fois, un programme d'analyse de données sur la base de données de signaux d'aéronefs, et avec ledit programme d'analyse de données :

- on détermine un ensemble de paires de paramètres dont les signaux de la paire évoluent d'une manière corrélée positivement au cours du temps et en l'absence de panne enregistrée pour au moins un vol donné d'au moins un des aéronefs de la flotte, la corrélation correspondant à un résultat de calcul de valeur de corrélation entre signaux de la paire supérieur à un seuil de corrélation déterminé positif,

b) lors d'une phase de maintenance entre vols, une fois que l'ensemble de paires de paramètres a été déterminé, que ce soit lors de la phase de maintenance au cours de laquelle ladite détermination de paires a été effectuée ou lors d'une phase de maintenance ultérieure à la phase de maintenance au cours de laquelle ladite détermination de paires a été effectuée, on exécute dans le calculateur un premier programme de détection sur la base de données de signaux d'aéronefs, et avec ledit premier programme de détection :

- on calcule les corrélations pour les paires de l'ensemble de paires déterminé pour un ou des vols ultérieurs à ceux ayant servis à ladite détermination de paires, et lorsque la valeur de la corrélation calculée d'une paire pour le ou un vol donné tombe en dessous d'un seuil de détection déterminé positif on signale un premier type d'anomalie pour le ou les équipements correspondants aux signaux de la paire pour ledit vol dans sa globalité.

Les termes « mesures enregistrées » et « signaux » sont équivalents dans le contexte de l'invention.
Dans divers modes de mise en oeuvre de l'invention, les moyens suivants pouvant être utilisés seuls ou selon toutes les combinaisons techniquement possibles, sont employés :

- lors de la détermination de l'ensemble de paires de paramètres dont les signaux de la paire évoluent d'une manière corrélée positivement au cours du temps et en l'absence de panne enregistrée pour au moins un vol donné d'au moins un des aéronefs de la flotte, lesdits paramètres de la paire doivent être des paramètres suivis dans tous les aéronefs de la flotte,
- d'une manière équivalente, lors du programme d'analyse, on détermine un ensemble de paires de paramètres dont les signaux de la paire évoluent d'une manière corrélée positivement au cours du temps et en l'absence de panne enregistrée pour au moins un vol donné d'au moins un des aéronefs de la flotte, la corrélation correspondant à un résultat de calcul de valeur de corrélation entre signaux de la paire supérieur ou égal à un seuil de corrélation déterminé positif,
- d'une manière équivalente, lors du premier programme de détection, on calcule les corrélations pour les paires de l'ensemble de paires déterminé pour un ou des vols ultérieurs à ceux ayant servis à ladite détermination de paires, et lorsque la valeur de la corrélation calculée d'une paire pour le ou un vol donné tombe en dessous ou devient égale d'un seuil de détection déterminé positif on signale un premier type d'anomalie pour le ou les équipements correspondants aux signaux de la paire pour ledit vol dans sa globalité,
- les paires sont déterminées au sein de mesures enregistrées, ou signaux, pour des paramètres provenant d'un même équipement, les signaux d'une paire correspondant toujours à un même équipement donné, des paires différentes pouvant provenir d'équipement différents,
- chaque paire de paramètres correspond à deux signaux d'un même équipement,
- les paires sont déterminées au sein de mesures enregistrées, ou signaux, pour des paramètres pouvant provenir d'équipements différents, les signaux d'une paire pouvant correspondre à deux équipements différents,
- des paires de paramètres peuvent correspondre à des signaux de deux équipements différents,
- de préférence, on détermine les paires sur un ensemble de vols du passé pour lesquels aucune panne n'a été enregistrée,
- on détermine les paires sur un ensemble de vols du passé successifs pour lesquels aucune panne n'a été enregistrée jusqu'à, non compris, un premier vol dudit passé pour lequel une panne a été enregistrée,
- on détermine les paires sur un ensemble de vols du passé dans lesquels on exclut les signaux de vol(s) pour le/lesquels une panne a été enregistrée pour l'équipement correspondant au signal exclus,
- en complément ou en remplacement de l'étape b) :

c) lors d'une phase de maintenance entre vols, une fois que l'ensemble de paires de paramètres a été déterminé, que ce soit lors de la phase de maintenance au cours de laquelle ladite détermination de paires a été effectuée ou lors d'une phase de maintenance ultérieure à la phase de maintenance au cours de laquelle ladite détermination de paires a été effectuée, on exécute dans le calculateur un second programme de détection sur la base de données de signaux d'aéronefs, et avec ledit second programme de détection : on calcule sur des périodes de temps déterminées de chaque vol les corrélations pour les paires de l'ensemble de paires déterminé pour un ou des vols ultérieurs à ceux ayant servi à ladite détermination de paires, chaque période permettant de définir un bloc de données dans les signaux de la base de données du calculateur, et lorsque la valeur de la corrélation calculée d'une paire dans la période considérée du ou d'un vol donné tombe en dessous d'un seuil de détection déterminé positif, et éventuellement devient égal à ce seuil, on signale un premier type d'anomalie pour le ou les équipements correspondants aux signaux de la paire pour ladite période considérée dudit vol,

- les périodes de temps ont des durées identiques, un vol donné étant découpé en périodes de temps égales,
- les périodes de temps ont des durées pouvant être variables et correspondent à une phase de vol déterminée, les phases de vol étant notamment le roulage, le décollage, le vol en croisière, l'atterrissage,

- on calcule en outre, pour chaque période, la variation de la corrélation entre deux périodes successives de chaque vol pour lequel les corrélations par périodes pour les paires de l'ensemble de paires déterminé ont été calculées, et lorsque la valeur de la variation calculée d'une paire entre les deux périodes successives considérées du ou d'un vol donné dépasse un seuil de variation déterminé et, de préférence signalant une diminution de la corrélation de la paire d'une période à la suivante, on signale un second type d'anomalie pour le ou les équipements correspondants aux signaux de la paire pour lesdites deux périodes considérées dudit vol,

- pour un vol donné, la variation de la corrélation pour la première période du vol est calculée entre la première période et la deuxième période et la variation de la corrélation pour la deuxième période ou les suivantes du vol est calculée entre ladite période et la période juste précédent,

- la variation de corrélation entre deux périodes est calculée par différence entre les valeurs des coefficients de corrélations des périodes correspondantes,

- la variation de corrélation entre deux périodes est calculée par la valeur absolue de la différence entre les valeurs des coefficients de corrélations des périodes correspondantes,

- les corrélations sont des corrélations de Pearson ou de Spearman,

- pour l'exécution du programme d'analyse de données, on utilise un seuil de corrélation égal à 0,7, les paires de paramètres devant avoir un résultat de calcul de valeur de corrélation entre signaux supérieur à 0,7,

- les ensembles de paires sont déterminés et le programme de détection exécuté individuellement pour chaque aéronef donné de la flotte, les signaux des différents aéronefs de la flotte n'étant pas utilisés ensembles en commun pour le programme d'analyse de données et le programme de détection,

- on représente graphiquement les résultats de calculs de corrélation du/des programmes de détection et pour représenter l'information de corrélation par vol ou par période on utilise la différence à 1 du résultat de calcul de corrélation afin qu'une corrélation restant forte soit représentée proche de zéro et on borne le résultat de calcul de corrélation entre [0-1] afin que des corrélations devenant négatives soient affichées à 1,

- plus généralement et pour tous les calculs on utilise la différence à 1 du résultat de calcul de corrélation afin qu'une corrélation forte soit proche de zéro,

- on limite les calculs du/des programmes de détection à un sous-ensemble de l'ensemble de paires déterminées, ledit sous-ensemble correspondant à une sélection statistique des paires de l'ensemble, la sélection correspondant notamment à un ou plusieurs des critères suivants :

- un nombre maximum de paires,

- les paires ayant le moins de variation entre vols dans le cas où plusieurs vols sont utilisés pour la détermination de l'ensemble de paires,

- les paires ayant le moins de variation entre les aéronefs dans le cas où plusieurs aéronefs sont utilisés pour la détermination de l'ensemble de paires,

- Les mesures enregistrées et/ou les pannes enregistrées sont en outre repérées pour le vol correspondant,

- Les mesures enregistrées et/ou les pannes enregistrées sont repérables pour chaque vol correspondant par comparaison avec des informations temporelles de début et de fin de chaque vol, lesdites informations temporelles pouvant ne pas être enregistrées dans la mémoire de l'aéronef ou pouvant l'être.

L'invention concerne enfin un moyen informatique programmable comportant des moyens logiciels et matériels permettant la mise en oeuvre du procédé de l'invention. Il est également considéré un support de données informatiques comportant un programme destiné à un ordinateur et lui permettant d'exécuter le procédé de l'invention. Plus précisément, un programme informatique qui comprend des moyens formant code aptes à exécuter, lorsqu'ils sont exécutés sur un ordinateur, le procédé de l'invention. On considère enfin un support de mémoire, lisible par un ordinateur, mémorisant un programme qui est le programme informatique de l'invention.

La présente invention, sans qu'elle en soit pour autant limitée, va maintenant être exemplifiée avec la description qui suit de modes de réalisation et de mise en oeuvre en relation avec :

la Figure 1 qui représente une visualisation de résultats de calculs de corrélation d'une paire de signaux sur deux vols successifs d'un même aéronef B,

la Figure 2 qui représente une visualisation des signaux de la paire d'un des deux vols de l'aéronef B de la Figure 1,

la Figure 3 qui représente une visualisation de résultats de calculs de corrélation pour la paire de signaux de la Figure 1 sur des vols successifs d'un autre aéronef H,

la Figure 4 qui représente une visualisation des signaux de la paire d'un des vols de l'aéronef H de la Figure 3 pour lequel il y a eu perte de la corrélation,

la Figure 5 qui représente une visualisation des signaux de la paire de la Figure 3, des calculs de corrélation par périodes et superposition de résultats de calcul de variation de corrélation pour ladite paire de signaux pour deux vols de l'aéronef H, et

la Figure 6 qui représente pour un vol donné les variations de corrélation entre périodes ou blocs de données d'une paire de signaux particulière.

Dans le cadre de la présentation de l'invention, un équipement d'aéronef est, en général, aussi bien un organe moteur, par ex. une pompe (le/un de ses paramètres mesurable peut alors être l'intensité absorbée), une vanne commandée (le/un de ses paramètres mesurable peut alors être sa position ouverte ou fermée) ou un organe mécanique, par ex. un volet (le/un de ses paramètres mesurable peut alors être la position angulaire dudit volet) ou, encore, un système ou partie de système, par ex. un circuit fluidique (le/un de ses paramètres mesurable peut alors être la pression du fluide ou son débit) ou un circuit électrique (le/un de ses paramètres mesurable peut alors être la tension ou l'intensité qui circule). En effet, afin de faciliter la gestion des équipements, il est possible de regrouper les équipements par système, par exemple les équipements du système de carburant, les équipements du système électrique, etc. On comprend que ces regroupements peuvent se faire selon plusieurs niveaux de précision.

On peut étendre cette notion de paramètre mesurable des équipements, aux systèmes ou même à l'aéronef globalement comme par exemple le paramètre « vol » (les mesures pouvant produire deux états : en vol/non-en-vol) ou « roulage » (les mesures pouvant être deux états : en roulage/non-en-roulage). Ainsi, les paramètres peuvent également correspondre à des mesures concernant le fonctionnement de l'aéronef en général. C'est en particulier le cas de la vitesse, l'altitude, de la température extérieure, de la pression atmosphérique, etc. qui sont des paramètres qui peuvent également être mesurés et enregistrés. En effet, il pourrait exister des corrélations entre de tels paramètres et ceux d'équipements de l'aéronef. Un numéro de lot pour un élément d'un équipement peut également être considéré comme un paramètre mesurable : par exemple on peut détecter un lot défectueux. Les signaux peuvent donc provenir directement de l'aéronef, ce qui est le cas général, ou être ajoutés ultérieurement, par exemple un identifiant de vol ou un numéro de lot d'élément d'équipement ou tout autre signal pouvant être utile.

On surveille donc les paramètres de l'aéronef pendant les vols, et même éventuellement en dehors des vols proprement dit, et on les mesure et on les enregistre sous forme de mesures enregistrées, encore dites signaux. Ces mesures enregistrées ou signaux sont récupérées dans une base de données d'un calculateur pour analyse lors de la maintenance entre les vols. Le calculateur est typiquement un microordinateur. Classiquement, ces signaux sont repérables selon divers critères et, notamment le temps, le paramètre et/ou l'équipement correspondant, le vol et l'aéronef concernés. Cela veut dire que pour une mesure enregistrée donnée, on est capable de savoir le moment de la mesure, à quoi elle correspond : en pratique à quel paramètre elle correspond, à quel vol elle appartient et à quel aéronef elle appartient. Ceci est obtenu directement et/ou indirectement selon les cas : par exemple, pour le temps, une variable temporelle est associée à chaque mesure, ou, alors, on connait le moment temporel de début des mesures ainsi que la périodicité des mesures et on peut en déduire le moment d'une mesure particulière.

En pratique, l'aéronef intègre un enregistreur de vol. Cet enregistreur de vol se charge d'enregistrer les divers signaux de l'aéronef tout au long du vol. Cet enregistrement constitue une des matières premières du procédé. Dans l'exemple ici donné on s'intéressera plus spécifiquement au système du carburant. Les paramètres ou signaux exposés représentent le système carburant des réservoirs d'extrémité et du centre des ailes de l'aéronef et ils sont identifiés par leurs noms avec, par exemple : CURM_20QN2_3_1, CURM_20QN2_2_1, CURM_20QN2_1_1, CURM_20QN1_3_1, CURM_20QN1_2_1, CURM_20QN1_1_1, CURM_11QL2_3_1, CURM_11QL2_2_1, CURM_11QL2_1_1, CURM_11QL1_3_1, CURM_11QL1_2_1, CURM_11QL1_1_1, CURM_10QL2_3_2, CURM_10QL2_2_2, CURM_10QL2_1_2, CURM_10QL1_3_2, CURM_10QL1_2_2, CURM_10QL1_1_2, CURM_9QL2_3_2, CURM_9QL2_2_2, CURM_9QL2_1_2, CURM_9QL1_3_2, CURM_9QL1_2_2, CURM_9QL1_1_2, CURM_6QA4_3_2, CURM_6QA4_2_2, CURM_6QA4_1_2, CURM_6QA1_3_1, CURM_6QA1_2_1, CURM_6QA1_1_1, CURM_5QA4_3_1, CURM_5QA4_2_1, CURM_5QA4_1_1, CURM_5QA1_3_2, CURM_5QA1_2_2, CURM_5QA1_1_2, CURM_20QA1_3_2, CURM_13QN2_3_1, CURM_13QN2_2_1, CURM_13QN2_1_1, CURM_13QN1_3_1, CURM_13QN1_2_1, CURM_13QN1_1_1, FVLVBROTSH_1_1, FVLVBROTOP_1_1, FVLVBRMTSH_1_1, FVLVBRMTOP_1_1, FVLVBLOTSH_1_1, FVLVBLOTOP_1_1, FVLVBLMTSH_1_1, FVLVBLMTOP_1_1, FVLVARMTSH_1_1, FVLVARMTOP_1_1, FVLVALMTSH_1_1, FVLVALMTOP_1_1, FQWT_RO_1, FQWT_RM_1, FQWT_LO_1, FQWT_LM_1, FPMPBROTPS_1_1, FPMPBROTEN_1_1, FPMPBRMTPS_1_1, FPMPBRMTEN_1_1, FPMPBLOTPS_1_1, FPMPBLOTEN_1_1, FPMPBLMTPS_1_1, FPMPBLMTEN_1_1, FPMPARMTPS_1_1, FPMPARMTEN_1_1, FPMPALMTPS_1_1, FPMPALMTEN_1_1.

Les signaux de type CURM (Current Measure) représentent le courant exprimé en Ampère circulant dans les SSPC (Solid State Power Control) pilotant les pompes à carburant. Les 4 caractères suivants permettent l'identification du Sous-Système. Les 3 chiffres suivants permettent l'identification de l'aile (1= aile gauche, 2= aile droite), le numéro de la phase (triphasé) et le numéro de l'élément (1= élément normal, 2= élément de secours).

Les signaux de type FQWT (Fuel Quantity Weight) représentent la quantité de carburant exprimé en kilogramme restant dans un réservoir. Les 2 caractères suivants permettent l'identification du réservoir concerné (RO=right outer, LO=left outer, MO=middle outer, LO=left outer).

Les signaux de type FVLV (Valve) représentent le statut ouvert ou fermé des valves à carburant. Le caractère suivant représente le système principal ou celui de secours (A, B). Les 3 caractères suivants représente l'identification du réservoir concerné (RMT=right middle tank, LMT=left middle tank, LOT=left outer tank, ROT=right outer tank). Les 2 derniers caractères représentent la nature du statut (OP=Open, SH=Shut).

Les signaux de type FPMP (Pump) représentent le statut non alimenté ou sous pression. Les 2 derniers caractères représentent la nature du statut (EN=Energized, PS=Pressure switch).

En outre, l'aéronef génère des rapports déclenchés par un évènement préalablement configuré tel que l'atterrissage, le décollage... Ce rapport est une photographie de valeur de certains signaux au moment d'un événement. Enfin l'aéronef enregistre la totalité des messages de panne. Un message de panne contient un temps d'apparition, une référence d'un système (code ATA Air Transport Association), une classe de message : avertissement (WN= warning) ou défaillance (FR=failure) et un message textuel.

Dans un premier temps, il est nécessaire de déterminer des paires de paramètres, encore dits paires de signaux, dont les deux signaux de la paire ont des variations dans le temps qui se suivent, c'est-à-dire, qui évoluent de la même manière, dans le cadre du fonctionnement normal de l'aéronef. A cette fin, on utilise un calcul de corrélation entre des paires de paramètres enregistrés ou signaux à la recherche des paires ayant la plus forte corrélation. Comme on le sait, le résultat d'un calcul de corrélation peut varier de -1 (anti-corrélation) à +1 (corrélation) en passant par 0 (absence de corrélation). Dans l'exemple représenté, on considère les corrélations positives, c'est-à-dire proche de 1. On comprend que s'il existe des corrélations négatives (anti-corrélation) cela signifie que les signaux sont aussi liés entre eux en fonctionnement normal et que dans des variantes de mise en oeuvre de l'invention on peut utiliser ces corrélations négatives et rechercher le fait qu'elles se modifient pour la détection d'anomalie. Dans une autre variante, on peut, pour des signaux à corrélation négative, procéder à un calcul d'inversion sur un des signaux pour obtenir un résultat de calcul de corrélation qui soit positif au lieu de négatif.

Dans l'exemple décrit plus précisément, on utilisera donc les paires de paramètres dont les résultats de calcul de corrélation sont proches de +1 pour chaque vol sans signalement de panne considéré, la limite étant fixée à 0,7 : on garde une paire de signaux si son résultat de calcul de corrélation est supérieur à 0,7. On obtient ainsi un ensemble de paires de paramètres ou signaux significatives qui serviront lors des recherches ultérieures d'anomalies.

Le coefficient de corrélation considéré est le coefficient de Pearson ou Spearman entre deux signaux pour un vol. On considère une corrélation supérieure à 0,7 comme étant une forte corrélation. Cela permet l'observation de la dégradation de la corrélation d'un vol à un autre.

On comprend que cette détermination des paires est faite sur un historique de vols, en pratique une base de données dans laquelle les signaux sont transférés après chaque vol. Cet historique peut ainsi se compléter au fur et à mesure des vols. Il est donc possible de réitérer la détermination des paires au cours du temps, suite à de nouveaux vols. Toutefois, on s'assure que cette détermination est effectuée sur des vols sur lesquels des pannes n'ont pas été signalées et, si possible, dont on est à peu près sûr qu'ils sont des vols bien représentatif d'un fonctionnement normal de l'aéronef. En effet, dans le cas de perte de corrélation lente et progressive on pourrait perdre une/des paires sans qu'il y ait eu une détection d'anomalie. On comprend qu'il est possible de mettre en oeuvre d'autres critères pour la sélection des vols et/ou signaux utilisés pour la détermination des paires.

Pour les affichages lors de la visualisation des résultats par le calculateur, on préfère inverser les résultats de calcul de corrélation, c'est-à-dire que dans le cas où les signaux sont fortement corrélés entre eux (résultat du calcul de corrélation proche de +1), il s'affiche une valeur proche de 0 et donc, en cas de représentation graphique, qu'une faible surface s'affiche. A cette fin, on fait la différence à 1 du résultat de calcul de corrélation et on obtient une valeur de corrélation inversée par rapport à la valeur de corrélation directe ou brute. On comprend que ceci est une convention du programme, notamment pour la visualisation des résultats, et qu'il est possible d'en utiliser une autre.

Dans la suite on appellera « CIL C » le résultat retranché de 1 du calcul de corrélation sur une paire de signaux.

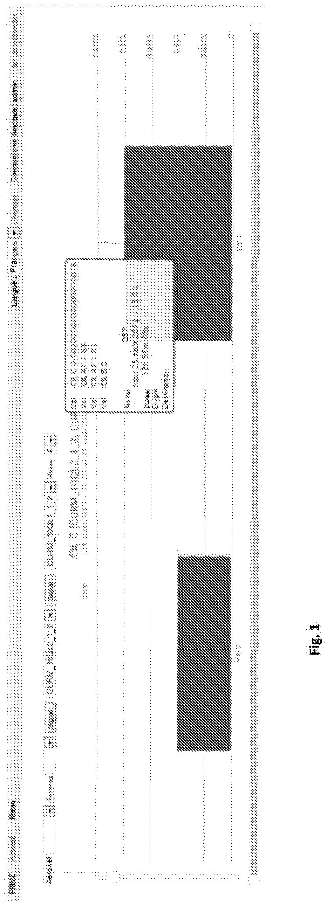

Sur la Figure 1, les CIL C de deux vols successifs d'un aéronef B ont été représentés. Ces CIL C ont des valeurs de représentation faibles, 0,001 pour le vol 0 et 0,002 pour le vol 1, ce qui signifie que les signaux de la paire sont fortement corrélés puisque la représentation résulte de la différence à 1 du calcul de corrélation qui a donc donné respectivement 0,999 et 0,998. En l'espèce les signaux de la paire sont : CURM_10QL2_1_2 et CURM_10QL1_1_2. Un calcul de corrélation avait été effectué lors de la détermination des paires et pour cette paire il a bien donné des résultats supérieurs au seuil de 0,7 nécessaire pour garder la paire et, par conséquence, on a bien là une paire significative.

A noter sur la Figure 1, l'existence d'un curseur sur le vol 1 qui permet d'obtenir un affichage détaillé des caractéristiques de ce vol. Plus généralement, on trouve notamment les paramètres suivants sur les affichages : numéro de vol (« Flight number »), date de vol (« flight date »), durée (« duration »), heure de départ (« departure time »), heure d'arrivée (« arrival time »), carburant (« FUEL »), appliquer (« Apply »), remis à zéro (« Reset »), valeur (« value »), aéronef (« aircraft »).

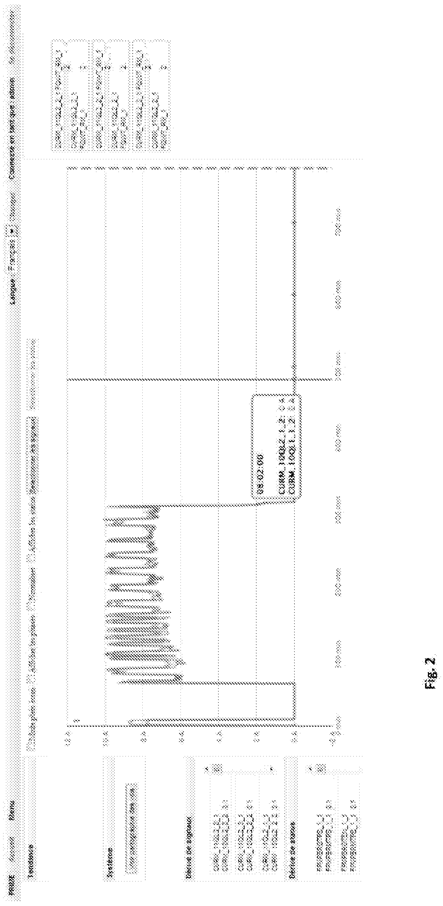

Afin de mieux comprendre cette notion de corrélation, on a représenté sur la Figure 2, les deux signaux de la paire de la Figure 1 pour le vol 1 de cet aéronef B. On constate bien, visuellement, que les deux signaux de cette paire significative ont des comportements semblables, expliquant le résultat du calcul de corrélation de cette paire.

Pour résumer : dans une première étape, on analyse les liens entre les variables et on détermine des paires de variables de première importance sur la base d'un calcul de corrélation. Pour établir une liste de telles paires de variables corrélés, on calcule les corrélations entre tous les appariements possibles de variables pour tous les vols enregistrés. Une même paire sera présente autant de fois qu'il y a de vols, si elle a pu être calculée dans tous les vols. On prend comme règle de sélection des paires de première importance : une paire est considérée comme de première importance et conservée dans la liste des paires si le quantile à 0,7 de l'ensemble des corrélations de cette paire est supérieur ou égale à 0,7. Cette tolérance permet de suivre l'évolution de paires en général bien corrélées et de rechercher d'éventuelles ruptures de corrélation. Du fait de cette règle, ne sont pas prises en compte à titre de paire de première importance, des variables dont le coefficient de corrélation entre elles est très faible, ce qui correspond à la grande majorité des appariement possibles de variables pouvant être analysées.

A noter qu'il peut être utile d'effectuer un prétraitement des variables avant la détection des paires de première importance et leur analyse. C'est en particulier le cas pour les variables concernant les moteurs de l'aéronef. On utilise donc un algorithme pour filtrer les données de vol sur le système moteur. En particulier, on n'utilise pas toutes les variables de type N1V et TRAV et on en retire certaines des mesures car on considère qu'elles ne relèvent pas du fonctionnement du système moteur mais dépendent fortement des commandes.

Tout d'abord, on retire au début et à la fin du vol respectivement environ 4 min de données de vol concernant les variables N1V. En pratique, les données conservées pour les variables N1V sont uniquement celles pendant que les quatre moteurs sont allumés et fonctionnent.

La variable TRAV permet de détecter d'éventuelles asymétries dans la position des manettes de commande des gaz qui pourraient introduire un biais sur d'autres paramètres. Elles sont considérées par couples en miroir : le moteur 1 et 4 d'une part, le moteur 2 et 3 d'autre part. Sont écartées de l'analyse les mesures enregistrées qui correspondent à des moments de vol où la valeur absolue de la différence entre les deux couples est supérieure à 1,5.

Une fois les paires significatives déterminées, dans un deuxième temps on s'intéressera aux paramètres correspondants pour des vols, normalement ultérieurs à ceux ayant servis à la détermination, et on calculera leur corrélation à la recherche d'une perte de cette corrélation.

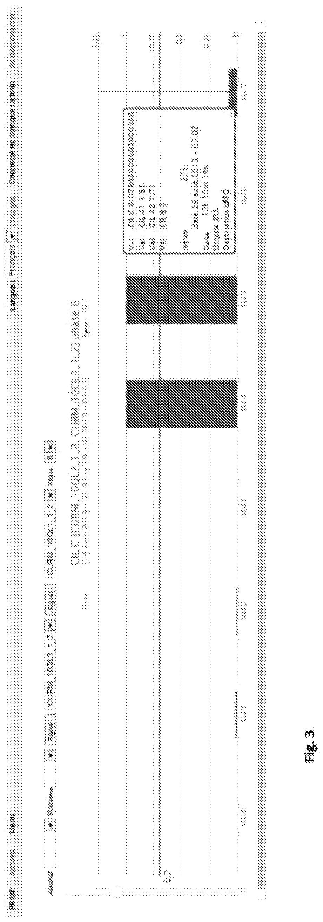

Par exemple, sur la Figure 3, on a effectué les calculs de corrélation pour la même paire CURM_10QL2_1_2 et CURM_10QL1_1_2 sur des vols d'un autre aéronef, l'aéronef H qui est du même type que l'aéronef B, et les CIL C sont représentés pour une série de 7 vols. On peut constater que la représentation des CIL C des vols 0, 1, 2, 3 et 6 est faible indiquant la persistance d'une forte corrélation de ces signaux de la paire. Par contre, pour les vols 4 et 5 les CIL C sont pratiquement à 1 visualisant une totale décorrélation des signaux de la paire, une panne ayant même probablement été enregistrée lors de ces vols. Pour le vol 7, le CIL C est représenté avec une valeur de 0,0789 qui s'écarte des CIL C des vols 0, 1, 2, 3 et 6. On peut donc déjà visuellement détecter pour le vol 7 qu'il s'est passé quelque chose d'anormal. On comprend que par un calcul simple de dépassement de seuil on peut automatiser cette détection d'anomalie. Ce seuil peut être une valeur fixe ou résulter d'un calcul, par ex. moyenne, sur des CIL C ayant certaines caractéristiques déterminées, par ex. eux même inférieurs à un autre seuil.

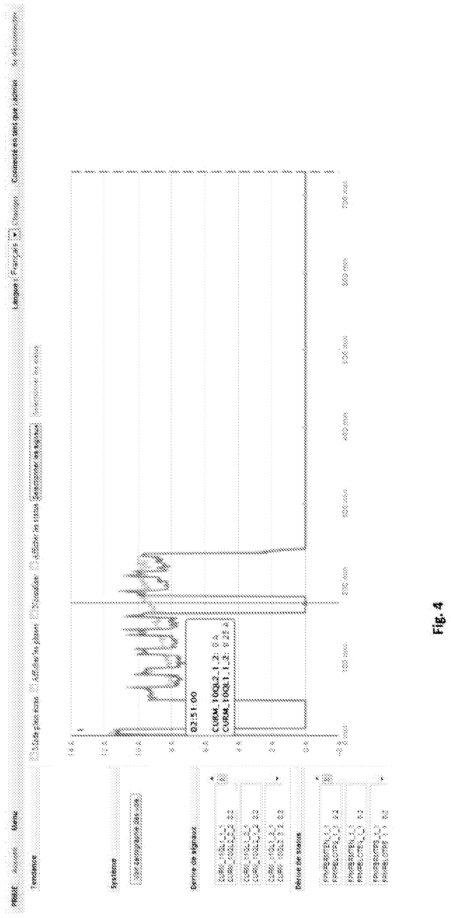

De fait, l'existence de ce CIL C à 0,0789 peut s'expliquer avec la Figure 4 qui représente les signaux de la paire pour le vol correspondant. On y note la présence d'un comportement anormal d'un des signaux de la paire, une des phases électriques tombant à zéro alors que l'autre conserve une valeur élevée d'ampérage.

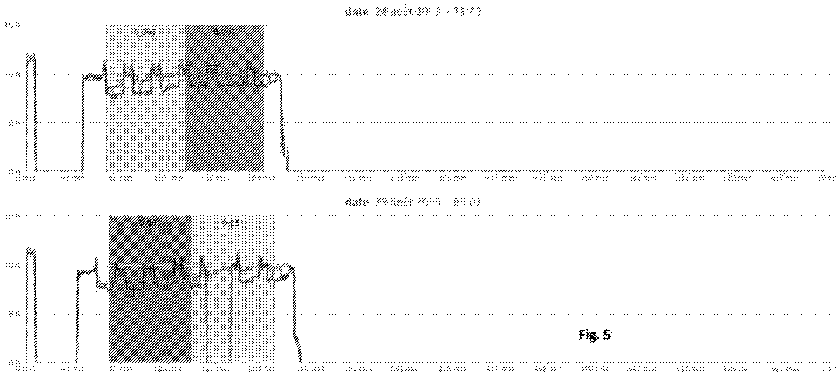

Cette détection d'anomalie qui se fait globalement par vol, peut être affinée par une détection par périodes de vol, une période de vol correspondant à un « bloc » de données des signaux. Dans l'exemple donné, les périodes sont des périodes de temps égales découpant le vol. Par exemple, on peut diviser un vol en 10 périodes de temps égales. Ainsi, sur la Figure 5, on a représenté en superposition les signaux de la même paire CURM_10QL2_1_2 et CURM_10QL1_1_2 pour les vols 6 et 7 ainsi que certaines des périodes ou blocs en grisés et les valeurs de variation de la corrélation ou « pente » entre les périodes. Pour le vol 6, en haut de la Figure 5, la variation de corrélation entre périodes est faible : 0,005 et 0,001 respectivement. Il en est de même pour la première période du vol 7 en bas de la Figure 5, où la variation de corrélation est faible à 0,003. Par contre, pour la seconde période du vol 7, la variation de corrélation est importante à 0,251 et correspond au comportement anormal des signaux signalé précédemment. On peut donc également visuellement détecter pour le vol 7 qu'il s'est passé quelque chose d'anormal du fait de la forte valeur de la variation de corrélation. On comprend que par un calcul simple de dépassement de seuil on peut automatiser cette détection. Ce seuil peut être une valeur fixe ou résulter d'un calcul, par ex. moyenne, sur des variations de corrélation ayant certaines caractéristiques déterminées, par ex. elles même inférieures à un autre seuil.

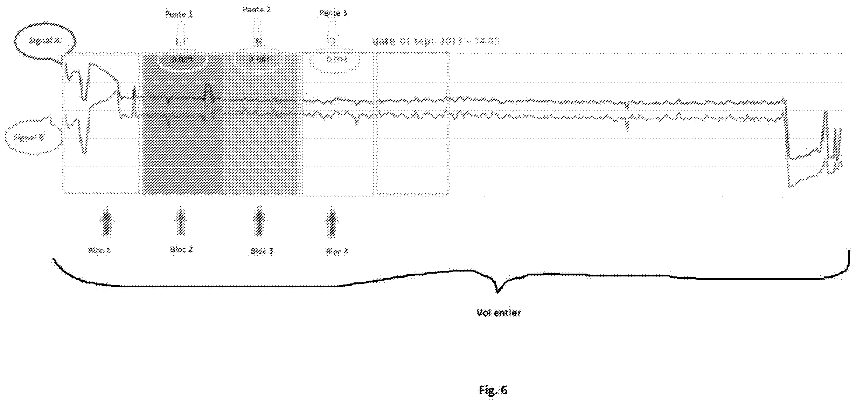

On va maintenant expliquer en relation avec la Figure 6, la manière de calculer les variations de la corrélation ou « pente » entre les périodes. Le vol a été segmenté en périodes correspondant à des blocs de données enregistrées. On s'intéresse ici à la paire de signaux formée du signal A et du signal B. Le premier bloc considéré est le bloc 1 situé au début du vol, à gauche sur la Figure 6. On a mis en oeuvre le calcul de corrélation inversé, c'est-à-dire les CIL pour la paire de signaux en question. Un premier CIL a été calculé pour le bloc 1, un deuxième pour le bloc 2, etc. La variation de CIL ou pente se calcule par différence entre deux CIL de blocs successifs. La pente 1 pour le bloc 2 a pour valeur 0,089 et se calcule par [CIL(signal A, signal B) du bloc 2] - [CIL(signal A, signal B) du bloc 1]. La pente 2 pour le bloc 3 a pour valeur 0,064 et se calcule par [CIL(signal A, signal B) du bloc 3] - [CIL(signal A, signal B) du bloc 2]. La pente 3 pour le bloc 4 a pour valeur 0,004 et se calcule par [CIL(signal A, signal B) du bloc 4] - [CIL(signal A, signal B) du bloc 3]. Le principe de calcul de la pente est donc de faire la différence des CIL avec le bloc précédent le bloc considéré. Si on avait calculé la pente pour le bloc 1 on aurait fait la différence contraire, c'est-à-dire par rapport au bloc 2 (le suivant et non pas le précédent), par convention, étant donné qu'il n'existe pas de bloc avant le bloc 1. On comprend que ces conventions sont exemplatives et que le principe de calcul de pente peut utiliser en alternative la différence avec le bloc suivant.

Pour résumer, dans une seconde étape d'analyse, on recherche des pertes de corrélation au sein des paires de première importance. A cette fin, il est calculé un coefficient de corrélation au sens de Pearson pour mesurer la linéarité du lien entre deux séries temporelles de variables des paires de première importance d'un même vol. De préférence ces séries temporelles correspondent à des blocs temporels/périodes de données. On calcule un indice de déviation appelé CIL C défini à partir du coefficient de corrélation (au sens de Pearson) :

$$CIL = 1 - \frac{|Cov(X,Y)|}{\sigma X . \sigma Y}$$

où $Cov(X, Y)$ désigne la covariance entre les séries $X$ et Y.

Le but étant ici de suivre l'évolution de ces coefficients pour une paire de première importance donnée au cours du temps afin de pouvoir repérer les moments où les valeurs dévient entre elles et la corrélation passe en dessous d'un certain seuil à partir duquel on considère que le niveau de corrélation n'est plus satisfaisant. Si la relation linéaire qui unissait les deux variables ne l'est plus, alors on est susceptible d'observer un comportement atypique. On peut ensuite remonter aux signaux concernés pendant le vol pour plus d'informations et un diagnostic.

En pratique, les données de vols contiennent des paramètres qui sont de plusieurs types : les signaux continus qui évoluent dans le temps et prennent leurs valeurs dans un intervalle défini et les signaux binaires (variables dichotomiques) qui sont en fait des *bits* codant un statut particulier (valant 0 ou 1 pour, par exemple : ouverture/fermeture, alimenté ou non alimenté, etc...).

On utilise les méthodes de calcul suivantes pour calculer les CILs selon les différents types de variables :

| Type Variable 1 | Type Variable 2 | Méthode CIL C |
|---|---|---|
| Continue | Continue | Coefficient de Pearson |
| Dichotomique | Dichotomique | Coefficient de Spearman |
| Continue | Dichotomique | Coefficient de Pearson |

Pour les paires de variables continue + dichotomique, on identifie préalablement les paires corrélées. Par exemple, on peut considérer des signaux d'ampérage et les *bits* d'ouverture de valve, d'alimentation de commutateur...

Comme expliqué et afin de générer des indicateurs de corrélation plus précis qui correspondent à une partie précise du vol étudié, on divise les données en blocs. Ainsi, on passe, pour une paire de première importance donnée, d'un CIL C par vol à n CILs C par vol, où n est le nombre de subdivisions/blocs que l'on souhaite au sein du vol. Le calcul du CIL C reste le même par blocs mais la plage de données sur laquelle il est calculé va évoluer en fonction du nombre de subdivisions/blocs choisi. Plus *n* est grand, plus on augmente la précision mais plus le processus d'analyse est lourd.

En outre de l'utilisation en prédictif des moyens de l'invention, il est également possible de mettre en oeuvre l'invention dans un mode rétrospectif en partant, pour l'analyse des données, d'un vol V pour lequel au moins une panne a été enregistrée et en s'intéressant aux vols précédents V-1, V-2... afin d'y déterminer une évolution des corrélations, appelée « pattern », pour au moins une paire de paramètres. Plus précisément, on détermine l'évolution de la corrélation ou « pattern » d'une paire donnée sur un nombre déterminé de vols, typiquement 5, comprenant pour dernier vol le vol V de la panne enregistrée, soit typiquement les vols V-4, V-3, V-2, V-1 et V. Pour la paire donnée, on calcule les corrélations pour ces vols et ces corrélations forment ledit « pattern ». Ces corrélations peuvent être les corrélations brutes/directes ou, alors, celles inversées qui correspondent à des CIL. De préférence, on utilise les valeurs de corrélations inversées ou CIL. Dans une variante, cette évolution ou « pattern » plutôt que d'être une suite de valeurs, est une combinaison linéaire de ces valeurs selon une fonction déterminée. Dans un cas particulier que l'on peut rapprocher de la combinaison linéaire, on regroupe les vols en question et on calcule la corrélation ou son inverse sur l'ensemble de ces vols, ce qui permet d'obtenir une valeur unique pour l'évolution ou « pattern ».

Une fois cette évolution ou « pattern » déterminé, on balaye dans l'historique l'ensemble des vols à la recherche, par comparaison, d'une évolution ou « pattern » semblable sur une suite d'un même nombre de vols successifs, typiquement 5 vols, à la manière d'une fenêtre mobile dans l'historique des vols. On comprend que cette recherche s'effectue en effectuant les mêmes types de calculs sur ces vols successifs historiques que ceux effectués pour déterminer l'évolution ou « pattern » initial afin que la comparaison soit significative. Pour la comparaison, on met en oeuvre de préférence des seuils d'acceptation ou non acceptation plutôt qu'une recherche d'égalité dans les évolutions. Par exemple, dans le cas où l'évolution ou « pattern » correspond à une valeur unique, on recherche ce « pattern » dans l'historique en définissant un seuil s de tolérance, et on considère que l'on retrouve le « pattern » si : valeur calculée sur une fenêtre de l'historique - valeur initiale (celle calculée avec le vol V) < s. On peut ainsi déterminer le nombre de fois où l'on retrouve le « pattern » en question dans l'historique. On comprend que cette analyse a posteriori peut également servir à une analyse prédictive en ayant tout d'abord déterminé le/les « patterns » qui sont significatifs d'une panne donnée, c'est-à-dire en pratique la/les paires significatives et la/les valeurs de corrélation, et en utilisant ce « pattern » pour des comparaisons avec un nouveau vol, le dernier vol (le plus récent) de la fenêtre de comparaison étant le nouveau vol, les précédents étant déjà dans l'historique.

A noter que, de préférence, dans le cas où l'on effectue des calculs par périodes ou blocs, ces calculs se font au sein d'un vol donné, c'est-à-dire que les blocs considérés n'appartiennent qu'à un vol donné.

## Revendications

**1.** Procédé de prédiction d'une anomalie de fonctionnement des équipements d'un aéronef d'une flotte d'aéronefs de même type, chacun desdits équipements de chaque aéronef ayant au moins un paramètre d'état ou de fonctionnement, lesdits paramètres étant suivis au cours de vols, dans le temps, par des mesures de paramètres d'équipement enregistrés dans une mémoire de l'aéronef, lesdites mesures enregistrées, encore appelées signaux, étant repérables dans le temps et pour le paramètre correspondant et pour l'équipement correspondant et pour l'aéronef correspondant, l'aéronef comportant en outre un moyen de détection de pannes des équipements, lesdites pannes étant également enregistrées dans la mémoire de l'aéronef, lesdites pannes enregistrées étant également repérables dans le temps et pour au moins l'équipement correspondant et pour l'aéronef correspondant, les mesures enregistrées et les pannes enregistrées étant en outre repérables pour chaque vol correspondant, dans lequel procédé lors des phases de maintenance entre des vols, on copie les mesures enregistrées, ou signaux, et éventuelle(s) panne(s) dans un calculateur programmable pour former une base de données de signaux d'aéronefs de la flotte, et:

a) lors d'une phase de maintenance entre vols, on exécute dans le calculateur, au moins une première fois, un programme d'analyse de données sur la base de données de signaux d'aéronefs, et en ce que avec ledit programme d'analyse de données :

- on détermine un ensemble de paires de paramètres dont les signaux de la paire évoluent d'une manière corrélée positivement au cours du temps et en l'absence de panne enregistrée pour au moins un vol donné d'au moins un des aéronefs de la flotte, la corrélation correspondant à un résultat de calcul de valeur de corrélation entre signaux de la paire supérieur à un seuil de corrélation déterminé positif,

b) lors d'une phase de maintenance entre vols, une fois que l'ensemble de paires de paramètres a été déterminé, que ce soit lors de la phase de maintenance au cours de laquelle ladite détermination de paires a été effectuée ou lors d'une phase de maintenance ultérieure à la phase de maintenance au cours de laquelle ladite détermination de paires a été effectuée, on exécute dans le calculateur au moins un programme parmi un premier programme de détection sur la base de données de signaux d'aéronefs et un second programme de détection sur la base de données de signaux d'aéronefs, et avec ledit premier programme de détection :

- on calcule les corrélations pour les paires de l'ensemble de paires déterminé pour un ou des vols ultérieurs à ceux ayant servis à ladite détermination de paires, et en ce que lorsque la valeur de la corrélation calculée d'une paire pour le ou un vol donné tombe en dessous d'un seuil de détection déterminé positif on signale un premier type d'anomalie pour le ou les équipements correspondants aux signaux de la paire pour ledit vol dans sa globalité,

et avec ledit second programme de détection :

- on calcule sur des périodes de temps déterminées de chaque vol les corrélations pour les paires de l'ensemble de paires déterminé pour un ou des vols ultérieurs à ceux ayant servis à ladite détermination de paires, chaque période permettant de définir un bloc de données dans les signaux de la base de données du calculateur, et en ce que lorsque la valeur de la corrélation calculée d'une paire pour la période considérée du ou d'un vol donné tombe en dessous d'un seuil de détection déterminé positif, et éventuellement devient égal à ce seuil, on signale un premier type d'anomalie pour le ou les équipements correspondants aux signaux de la paire pour ladite période considérée dudit vol, **caractérisé en ce que** les périodes de temps ont des durées pouvant être variables et correspondent à une phase de vol déterminée, les phases de vol étant notamment le roulage, le décollage, le vol en croisière, l'atterrissage, et **en ce qu'**on représente graphiquement les résultats de calculs de corrélation du/des programmes de détection et **en ce que** pour représenter l'information de corrélation par vol ou par période, on utilise la différence à 1 du résultat de calcul de corrélation afin qu'une corrélation restant forte soit représenté proche de zéro et **en ce qu'**on borne le résultat de calcul de corrélation entre [0-1] afin que des corrélations devenant négatives soient affichées à 1.

2. Procédé de prédiction selon la revendication 1, **caractérisé en ce qu'**on exécute dans le calculateur au moins le second programme de détection.

3. Procédé de prédiction selon l'une des revendications 1 ou 2, **caractérisé en ce qu'**on calcule en outre, pour chaque période, la variation de la corrélation entre deux périodes successives de chaque vol pour lequel les corrélations par périodes pour les paires de l'ensemble de paires déterminé ont été calculées, et **en ce que** lorsque la valeur de la variation calculée d'une paire entre les deux périodes successives considérées du ou d'un vol donné dépasse un seuil de variation déterminé et, de préférence signalant une diminution de la corrélation de la paire d'une période à la suivante, on signale un second type d'anomalie pour le ou les équipements correspondants aux signaux de la paire pour lesdites deux périodes considérées dudit vol.

4. Procédé selon l'une quelconque des revendications précédentes, **caractérisé en ce que** les corrélations sont des corrélations de Pearson ou de Spearman.

5. Procédé selon l'une quelconque des revendications précédentes, **caractérisé en ce que** pour l'exécution du programme d'analyse de données, on utilise un seuil de corrélation égal à 0,7, les paires de paramètres devant avoir un résultat de calcul de valeur de corrélation entre signaux supérieur à 0,7.

6. Procédé selon l'une quelconque des revendications précédentes, **caractérisé en ce que** les ensembles de paires sont déterminés et le programme de détection exécuté individuellement pour chaque aéronef donné de la flotte, les signaux des différents aéronefs de la flotte n'étant pas utilisés ensemble en commun pour le programme d'analyse de données et le programme de détection.

7. Procédé selon l'une quelconque des revendications précédentes, **caractérisé en ce qu'**on limite les calculs du/des programmes de détection à un sous-ensemble de l'ensemble de paires déterminées, ledit sous-ensemble correspondant à une sélection statistique des paires de l'ensemble, la sélection correspondant notamment à un ou plusieurs des critères suivants :

   - un nombre maximum de paires,
   - les paires ayant le moins de variation entre vols dans le cas où plusieurs vols sont utilisés pour la détermination de l'ensemble de paires,
   - les paires ayant le moins de variation entre les aéronefs dans le cas où plusieurs aéronefs sont utilisés pour la détermination de l'ensemble de paires.

**Patentansprüche**

1. Verfahren zur Vorhersage einer Fehlfunktion in der Anlage eines Flugzeugs einer Flotte von Flugzeugen desselben Typs, wobei jede der Anlagen jedes Flugzeugs wenigstens einen Zustands- oder Betriebsparameter aufweist, wobei die Parameter im Verlauf von Flügen durch Messungen von in einem Speicher des Flugzeugs gespeicherten Anlagenparametern zeitlich verfolgt werden, wobei die auch als Signale bezeichneten gespeicherten Messungen sowohl für den betreffenden Parameter als auch für die entsprechende Anlage und für das entsprechende Flugzeug zeitlich erkennbar sind, wobei das Flugzeug außerdem ein Mittel zum Entdecken von Pannen der Anlage aufweist, wobei die Pannen ebenfalls im Speicher des Flugzeugs gespeichert werden, wobei die gespeicherten Pannen sowohl wenigstens für die entsprechende Anlage als auch für das entsprechende Flugzeug ebenfalls zeitlich erkennbar sind, wobei die gespeicherten Messungen und die gespeicherten Pannen außerdem für jeden entsprechenden Flug erkennbar sind,

wobei bei diesem Verfahren während Wartungsphasen zwischen Flügen

die gespeicherten Messungen bzw. Signale und eventuelle Pannen auf einen programmierbaren Rechner kopiert werden, um eine Datenbasis an Signalen von Flugzeugen der Flotte zu bilden, und

a) während einer Wartungsphase zwischen Flügen im Rechner wenigstens ein erstes Mal ein Programm zur Analyse von Daten in der Datenbasis an Signalen von Flugzeugen ausgeführt wird und mit dem Programm zur Analyse von Daten

- eine Gesamtheit von Parameterpaaren bestimmt wird, deren Signale des Paars sich in korrelierter Weise über die Zeit positiv entwickeln, und die Korrelation bei Nichtvorliegen einer gespeicherten Panne für wenigstens einen gegebenen Flug wenigstens eines der Flugzeuge der Flotte einem Rechenergebnis eines Korrelationswerts zwischen Signalen des Paars entspricht, der größer als ein bestimmter positiver Korrelationsschwellwert ist,

b) während einer Wartungsphase zwischen Flügen, nachdem die Gesamtheit von Parameterpaaren bestimmt worden ist, ganz gleich ob es während der Wartungsphase, bei der die Bestimmung von Paaren durchgeführt worden ist, oder während einer Wartungsphase nach der Wartungsphase, bei der die Bestimmung von Paaren durchgeführt worden ist, ist, im Rechner wenigstens ein Programm unter einem ersten Programm zur Entdeckung auf der Grundlage von Daten von Signalen von Flugzeugen und einem zweiten Programm zur Entdeckung auf der Grundlage von Daten von Signalen von Flugzeugen durchgeführt wird,

und mit dem ersten Programm zur Entdeckung

- die Korrelationen für die Paare der für einen oder mehrere Flüge, die nach jenen stattfinden, die für die Bestimmung der Paare gedient haben, bestimmten Gesamtheit von Paaren berechnet werden und, falls der berechnete Korrelationswert eines Paares für den oder einen gegebenen Flug unter eine bestimmte positive Entdeckungsschwelle fällt, ein erster Typ von Anomalie für die den Signalen des Paars entsprechende(n) Anlage(n) für den Flug in seiner Gesamtheit signalisiert wird,

und mit dem zweiten Programm zur Entdeckung

- über bestimmte Zeitabschnitte jedes Flugs die Korrelationen für die Paare der für einen oder mehrere Flüge, die nach jenen stattfinden, die für die Bestimmung der Paare gedient haben, bestimmten Gesamtheit von Paaren berechnet werden, wobei jeder Zeitabschnitt ermöglicht, einen Block von Daten in den Signalen der Datenbasis des Rechners zu definieren, und, falls der berechnete Korrelationswert eines Paars für den betrachteten Abschnitt des oder eines Flugs unter eine bestimmte positive Entdeckungsschwelle fällt und eventuell gleich dieser Schwelle ist, ein erster Typ von Anomalie für die den Signalen des Paars entsprechende(n) Anlage(n) für den betrachteten Abschnitt des Flugs signalisiert wird,

**dadurch gekennzeichnet, daß** die Zeitabschnitte Dauern aufweisen, die variabel sein können und einer bestimmten Flugphase entsprechen, wobei die Flugphasen im Wesentlichen das Rollen, das Abheben, der Reiseflug, die Landung sind, und daß die Ergebnisse der Berechnungen der Korrelation des Programms bzw. der Programme zur Entdeckung grafisch angezeigt werden und daß zur Darstellung der Information der Korrelation pro Flug oder pro Abschnitt der Unterschied zu 1 des Ergebnisses der Berechnung der Korrelation verwendet wird, damit eine stark bleibende Korrelation dicht bei Null dargestellt wird, und daß das Ergebnis der Berechnung der Korrelation zwischen [0 - 1] begrenzt wird, um negativ werdende Korrelationen bei 1 anzuzeigen.

2. Verfahren zur Vorhersage gemäß Anspruch 1, **dadurch gekennzeichnet, daß** im Rechner wenigstens das zweite Programm zur Entdeckung durchgeführt wird.

3. Verfahren zur Vorhersage gemäß einem der Ansprüche 1 oder 2, **dadurch gekennzeichnet, daß** außerdem für jeden Abschnitt die Variation der Korrelation zwischen zwei aufeinanderfolgenden Abschnitten jedes Flugs, für den die Korrelationen abschnittsweise für die Paare der Gesamtheit von Paaren bestimmt worden sind, berechnet wird und daß, falls der berechnete Variationswert eines Paares zwischen den beiden betrachteten aufeinanderfolgenden Abschnitten des oder eines gegebenen Flugs eine bestimmte Variationsschwelle überschreitet, ein zweiter Typ von Anomalie für die den Signalen des Paars entsprechende(n) Anlage(n) für die beiden betrachteten Abschnitte des Flugs signalisiert wird.

4. Verfahren gemäß einem der vorangehenden Ansprüche, **dadurch gekennzeichnet, daß** die Korrelationen Pearson- oder Spearman-Korrelationen sind.

5. Verfahren gemäß einem der vorangehenden Ansprüche, **dadurch gekennzeichnet, daß** zur Durchführung des Programms der Analyse der Daten eine Korrelationsschwelle gleich 0,7 verwendet wird, wobei die Parameterpaare ein Ergebnis der Berechnung des Korrelationswerts zwischen Signalen von größer als 0,7 haben sollen.

6. Verfahren gemäß einem der vorangehenden Ansprüche, **dadurch gekennzeichnet, daß** für jedes Flugzeug der Flotte individuell die Gesamtheiten von Paaren bestimmt werden und das Programm zur Entdeckung durchgeführt wird, wobei die Signale der verschiedenen Flugzeuge der Flotte nicht zusammen für das Programm zur Analyse der Daten und das Programm zur Entdeckung gemeinsam verwendet werden.

7. Verfahren gemäß einem der vorangehenden Ansprüche, **dadurch gekennzeichnet, daß** die Berechnungen des Programms bzw. der Programme zur Entdeckung auf eine Untereinheit der Gesamtheit der bestimmten Paare begrenzt wird, wobei die Untereinheit einer statistischen Auswahl der Gesamtheit der Paare entspricht, wobei die Auswahl insbesondere einem oder mehreren der folgenden Kriterien entspricht:

- eine maximale Anzahl Paare,
- die Paare, die die wenigsten Variationen zwischen Flügen aufweisen, falls mehrere Flüge für die Bestimmung der Gesamtheit der Paare verwendet werden,
- die Paare, die die wenigsten Variationen zwischen den Flugzeugen aufweisen, falls mehrere Flugzeuge für die Bestimmung der Gesamtheit der Paare verwendet werden.

## Claims

1. A method for predicting an operational anomaly of the equipment of an aircraft of a fleet of aircraft of the same type, each item of said equipment of each aircraft having at least one operating or state parameter, said parameters being tracked in the course of flights, over time, by measurements of equipment parameters recorded in a memory of the aircraft, said recorded measurements, also called signals, being pinpointable in time and for the corresponding parameter and for the corresponding item of equipment and for the corresponding aircraft, the aircraft furthermore comprising a means for detecting faults of the equipment, said faults also being recorded in the memory of the aircraft, said recorded faults also being pinpointable in time and for at least the corresponding item of equipment and for the corresponding aircraft, the recorded measurements and the recorded faults being furthermore pinpointable for each corresponding flight,
in which method, during the inter-flight maintenance phases,
the recorded measurements, or signals, and possible fault(s) are copied into a programmable processor so as to form a database of signals of aircraft of the fleet, and t:

a) during an inter-flight maintenance phase, a data analysis program is executed in the processor, at least a first time, on the database of aircraft signals, and in that with said data analysis program:

- a set of pairs of parameters is determined for which the signals of the pair evolve in a positively correlated manner over time and in the absence of any recorded fault for at least one given flight of at least one of the aircraft of the fleet, the correlation corresponding to a calculation result greater than a positive determined correlation threshold for the value of correlation between signals of the pair,

b) during an inter-flight maintenance phase, once the set of pairs of parameters has been determined, whether this be during the maintenance phase in the course of which said determination of pairs was performed or during a maintenance phase subsequent to the maintenance phase in the course of which said determination of pairs was performed, at least one program from among a first detection program and a second detection program is executed in the processor on the database of aircraft signals,
and with said first detection program:

- the correlations are calculated for the pairs of the determined set of pairs for one or more flights subsequent to those that served for said determination of pairs, and in that when the value of the calculated correlation of a pair for the or a given flight falls below a positive determined detection threshold, then a first type of anomaly is signaled for the item or items of equipment corresponding to the signals of the pair for said flight in its entirety,

and with said second detection program:

- the correlations for the pairs of the determined set of pairs for one or more flights subsequent to those that served for said determination of pairs are calculated over determined time periods of each flight, each period making it possible to define a block of data in the signals of the database of the processor, and in that when the value of the calculated correlation of a pair for the considered period of the or of a given flight falls below a positive determined detection threshold, and possibly becomes equal to this threshold, then a first type of anomaly is signaled for the item or items of equipment corresponding to the signals of the pair for said considered period of said flight, **characterized in that** the time periods have durations that may be variable and that correspond to a determined flight phase, the flight phases being in particular taxiing, takeoff, cruising flight, landing, and **in that** the results of correlation calculations of the detection program(s) are represented graphically and **in that** to represent the correlation information per flight or per period, the difference with 1 of the correlation calculation result is used so that a correlation which remains strong is represented close to zero and **in that** the correlation calculation result is bounded between [0-1] so that correlations that have become negative are displayed at 1.

2. The prediction method as claimed in claim 1, **characterized in that** at least the second detection program is executed in the processor.

3. The prediction method as claimed in one of claims 2, 3 or 4, **characterized in that** the variation of the correlation between two successive periods of each flight for which the correlations per periods for the pairs of the determined set of pairs have been calculated is furthermore calculated for each period, and **in that** when the value of the calculated variation of a pair between the two successive considered periods of the or of a given flight exceeds a determined threshold of variation and, preferably signaling a decrease in the correlation of the pair from one period to the next, a second type of anomaly is signaled for the item or items of equipment corresponding to the signals of the pair for said two considered periods of said flight.

4. The method as claimed in any one of the preceding claims, **characterized in that** the correlations are Pearson or Spearman correlations.

5. The method as claimed in any one of the preceding claims, **characterized in that** for the execution of the data analysis program, use is made of a correlation threshold equal to 0.7, the pairs of parameters having to have a calculation result of greater than 0.7 for the value of correlation between signals.

6. The method as claimed in any one of the preceding claims, **characterized in that** the sets of pairs are determined and the detection program executed individually for each given aircraft of the fleet, the signals of the various aircraft of the fleet not being used together in common for the data analysis program and the detection program.

7. The method as claimed in any one of the preceding claims, **characterized in that** the calculations of the detection program(s) are limited to a subset of the set of determined pairs, said subset corresponding to a statistical selection of the pairs of the set, the selection corresponding in particular to one or more of the following criteria:

- a maximum number of pairs,
- the pairs having the least variation between flights in the case where several flights are used for determining the set of pairs,
- the pairs having the least variation between aircraft in the case where several aircraft are used for determining the set of pairs.

EP 3 097 455 B1

Fig. 1

14

Fig. 2

Fig. 3

Fig. 4

Fig. 5

Fig. 6

19

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013274964 A
- US 2005197805 A